(19) Europäisches Patentamt

European Patent Office

Office européen des brevets

(11) **EP 1 040 154 B1**

(12) **EUROPEAN PATENT SPECIFICATION**

(45) Date of publication and mention
of the grant of the patent:
**30.07.2003 Bulletin 2003/31**

(21) Application number: **98950683.7**

(22) Date of filing: **24.09.1998**

(51) Int Cl.[7]: **C08J 3/14**
// C08L75:04

(86) International application number:
**PCT/US98/20102**

(87) International publication number:
**WO 99/019386 (22.04.1999 Gazette 1999/16)**

(54) **METHOD OF MANUFACTURING MONODISPERSE POLYURETHANE PARTICLES**

VERFAHREN ZUR HERSTELLUNG VON MONODISPERSEN POLYURETHANPARTIKELN

PROCEDE DE FABRICATION DE PARTICULES DE POLYURETHANE MONODISPERSE

(84) Designated Contracting States:
**DE ES FR GB IT NL**

(30) Priority: **09.10.1997 JP 27733297**

(43) Date of publication of application:
**04.10.2000 Bulletin 2000/40**

(73) Proprietor: **National Starch and Chemical
Investment Holding Corporation
Wilmington, Delaware 19803-7663 (US)**

(72) Inventors:
• **YUYAMA, Hajime
Kobe-shi Hyogo Prefecture 658-0081 (JP)**

• **OMI, Shinzo
Suginami-Ku Tokyo 166-0001 (JP)**

(74) Representative:
**Held, Stephan, Dr.rer.nat., Dipl.-Chem. et al
Meissner, Bolte & Partner
Postfach 86 03 29
81630 München (DE)**

(56) References cited:
**GB-A- 1 412 159        US-A- 5 476 744**

## Description

The present invention relates to a method of manufacturing polyurethane fine particles of monodisperse having a distribution of particle diameter usable for a variety of uses as paint, ink, spacer material for liquid crystal display and so on, and the monodisperse polyurethane fine particles manufactured by said method.

As methods for manufacturing polyurethane particles of the so-called monodisperse type having a uniform particle diameter or a distribution of particle diameter in at least an extremely limited range, there has been known a method of manufacturing monodisperse polyurethane particles with a high-pressure homogenizer such as a microfluidizer, whereby planar collision between said polyurethane prepolymer and dispersant may be caused within the flowing passage under high velocity and high pressure, followed by subjecting the resulting fine particles having a uniform particle diameter to cross-linking reaction.

However, said known method has the following problems.

(1) Extremely high pressure as high as about 10,000 kgf/cm2 (about 1 GPa) is required for allowing said high-pressure homogenizer like microfluidizer to effectively work.
(2) A single passage only of the prepolymer through high-pressure homogenizer cannot provide said monodisperse particles. Rather, at least three passages thereof are necessary to produce fine particles in monodisperse form.
(3) Since heat generated during the dispersing process in said high-pressure homogenizer would cause unfavorable reaction between the prepolymer and water, generating bubbles. Thus, defoaming procedure becomes needed.

US-A-5 476 744 is directed to a toner for developing electrostatic latent images. Further, a method of manufacturing monodisperse fine particles by contacting a polymeric liquid with a dispersant is disclosed.

Accordingly, a primary object of the present invention is to provide an improvement in methods of manufacturing monodisperse polyurethane particles with an optional uniform diameter in a single operation without needing very high pressure (namely any high-pressure generator), but heat generated is so low during the process that there is no need of defoaming procedure.

One aspect of the the present invention is to provide a method of manufacturing monodisperse polyurethane particles having diameters of from 0.1 to 100 micrometers, comprising the steps of:

contacting a polyurethane prepolymer liquid with a dispersant via a hard porous membrane having a uniform porous diameter,

extruding said polyurethane prepolymer liquid through said hard porous membrane into said dispersant in the form of droplets; and

having said polyurethane prepolymer droplets hardened into spherical particles,

wherein said dispersant comprises water and a water-soluble chain extender.

The hard porous membrane is inherently provided with a distribution of monodisperse particle-diameter. Though particle diameter per se of each pore is very small, the membrane has a number of such pores. Therefore, the polyurethane prepolymer in liquid form may be extruded through these pores into liquid droplets having a uniform particle diameter, without necessitating the use of any high-pressure. Then, this polyurethane prepolymer, In the form of liquid droplets, is subjected to a subsequent reaction for hardening, thus providing the target monodisperse polyurethane fine particles, In this regard, what is referred to herein as "fine particles" means particles having a diameter ranging from about 0.1 to 100 μm, preferably from about 0.5 to 50 μm.

Examples of hard porous membranes are porous metal, porous ceramic, porous glass material and so on. Among them, the porous glass material is preferable, because it allows to easier manufacture the porous membrane having the desired pore diameter. In particular, the porous glass material obtained by subjecting to hydrophilic modification is more preferable.

If the prepolymer solution is extruded into the dispersant through the porous glass material after hydrophilic modification, the liquid droplets may be completely manufactured, thus resulting in polyurethane fine particles of extremely high uniformity. Incidentally, because of its inherent hydrophilicity, the glass material does not need any additional hydrophilic modification. However, said "hydrophilic modification" is understood to encompass within its scope such operations as effected for the purpose of maintaining this inherent hydrophilicity.

As dispersants to be used in the present invention, water is especially preferable, because of its polarity opposite to that of the polyurethane prepolymer and inexpensiveness.

Furthermore, it is preferred that the polyurethane prepolymer liquid be a solution of said polyurethane prepolymer in a hydrophobic organic solvent.

According to the present invention, the target polyurethane fine particles can be manufactured without using any organic solvent, as long as the polyurethane prepolymer has a viscosity enough to allow extrusion of the prepolymer through the porous glass material. Notwithstanding this, the proposed use of appropriate organic solvents for the purpose of positively adjusting the viscosity of the prepolymer will allow to use a great variety of materials or prepolymers of different degree of polymerization, thus enabling to manufacture polyurethane fine particles having a variety of properties. In such a case, it is desirable to use hydrophobic organic solvents, with which there may be obtained polyurethane fine particles having an extremely uniform diameter which allow greater freedom in selecting target properties thereof.

In the present invention, it is also preferred that the dispersant includes a water-soluble chain extender. This may rapidly accelerate the reaction of the extruded prepolymer with said chain extender under hardening. Thus, the polyurethane fine particles in greater stability can be obtained.

According to a further aspect of the present invention, there are provided monodisperse polyurethane fine particles with a distribution coefficient of particle-diameter ranging below 10.0%, said particles being manufactured by the steps of:

contacting a polyurethane prepolymer liquid with a dispersant via a hard porous membrane having a uniform porous diameter;
extruding said polyurethane prepolymer liquid through said hard porous membrane into said dispersant in the form of droplets; and
having said polyurethane prepolymer droplets hardened into spherical particles.

Here, the "distribution coefficient of particle-diameter" refers to a numerical value representing a distribution of particle-diameter obtained by the following expression:

$$(\sigma / r) \times 100 \ (\%)$$

wherein "r" is an average value of measured particle diameters and "σ" is a standard deviation. The smaller the value, the higher the uniformity. In general, a value below 10.0% is said to be "monodisperse".

Preferably, said monodisperse polyurethane particles include a coloring agent and may be used in paint, printing ink or the like, as they are.

According to the present invention, the monodisperse polyurethane particles can be manufactured by extruding a polyurethane prepolymer liquid having a terminal isocyanate group (NCO group) through a hard porous membrane having a uniform small porous diameter into a dispersant in the form of liquid droplets and subjecting them to a chain extending reaction of the NCO group for hardening into spherical particles.

The followings are specific examples of compounds usable as raw materials of polyurethane in the present invention.

(1) Polyisocyanate compounds:

All of diisocyanate or polyisocyanate compounds well-known in the art of polyurethane can be used. Specifically, the following compounds may be cited:

Aromatic polyisocyanate compounds:

4,4'-dihenylmethane diisocyanate (MDI), 2,4-toluene diisocyanate (TDI), 2,6-toluene diisocyanate, naphthalene diisocyanate (NDI), 1,4-benzene diisocyanate, etc.

Aliphatic diisocyanate compounds:

ethylene diisocyanate, 2,2,4-trimethylhexamethylene diisocyanate, 1,6-hexamethylene diisocyanate (HDI), etc.

Alicyclic diisocyanate compounds:

hydrogenated 4,4'-diphenylmethane diisocyanate (HMDI, Hylene-W, commerical name manufactured by Huels), 1,4-cyclohexane diisocyanate (CHDI), methylcyclohexylene diisocyanate, isophorone diisocyanate (IPDI), hydrogenated m-xylylene diisocyanate (HXDI), norbornane diisocyanate (NBDI), etc.

Xylylene diisocyanate (XDI), tetramethylxylylene diisocyanate (TMXDI), etc.

The polyurethane prepolymer used in the present invention is mainly manufactured by using diisocyanate compounds.

However, in consideration of physical properties of the resultant polyurethane, polyfunctional polyisocyanate compounds having three or more functional groups may be also used. Some specific examples of such polyfunctional polyisocyanate compounds are shown as follows:

crude MDI (44V-10, 44V-20, etc. manufactured by Bayer),
MDI containing ureton-imine (liquid MDI) (Nippon Polyurethane Industry Co., Ltd.)
triphenylmethane triisocyanate (Desmodur R), Desmodur RF (Bayer),
Colonate L (Nippon Polyurethane Industry Co., Ltd.),
Desmodur-L, Desmodur-N (Bayer),
adduct type polyisocyanate compounds (e.g. a series of compounds commercially available under the tradename of Duranate from Asahi Chemical Industry Co., Ltd.).

Said diisocyanate compounds and polyisocyanate compounds may be used singly or in combination.

(2) Polyol compounds:

The organic compounds having active hydrogen atoms enabling to react with at least two NCO groups are generally used in synthesis of polyurethane and referred to as "poyols". Polyols can be classified into ethers, esters and so on, which are selected, depending upon the application.

(i) Polyether polyols:

Some specific examples of polyether polyols include polyols such as polyoxypropylene polyols obtained by adding one or more kinds of propylene oxide, ethylene oxide, butylene oxide, or sytrene oxide to one or more kinds of polyhydric alcohols such as ethylene glycol, diethylene glycol, propylene glycol, dipropylene glycol, glycerin, trimethylolpropane, or pentaerythritol and also include polyoxytetramethylene polyols obtained by adding tetrahydrofuran to said potyhydric alcohols through ring-opening polymerization.

(ii) Polyester polyols:

Some specific examples of polyester polyols include condensation polymers obtained by condensation polymerization between one or more kinds of low molecular polyhydric alcohols such as ethylene glycol, propylene glycol, butanediol, pentanediol, hexanediol, cyclohexanedimethanol, glycerin, trimethylolpropane, pentaerythritol and so on and one or more kinds of low molecular dicarboxylic acid or oligomeric acid such as glutaric acid, adipic acid, pimelic acid, suberic acid, sebacic acid, terephthalic acid, isophthalic acid, dimer acid, hydrogenated dimer acid and so on, and polyols such as ring-opened polymers of cyclic esters such as propiolactone, caprolactone, and valeractone.

(iii) Acrylic polyols:

The acrylic polyols in the acrylic copolymers illustratively include those having two or more hydroxy groups in the molecule, which are obtained by copolymerization from monoethylenic unsaturated monomer having hydroxy group as a comonomer.. Examples of monomers having hydroxy groups are as follows:

hydroxyalkyl acrylates or methacrylates: β-hydroxyethyl acrylate, β-hydroxypropyl acrylate, 3-hydroxypropyl acrylate, β-hydroxybutyl acrylate, 4-hydroxybutyl acrylate, β-hydroxypentyl acrylate, and so on;
acrylic or methacrylic monoesters of polyhydric alcohols such as N-methylolacrylamide or N-methylolmethacrylamide.

(iv) Other polyols:

Other than those polyols mentioned above, it is possible to employ, as polyols in the present invention, phenol resin polyols, polybutadiene polyols, polyisoprene polyols, polyester-polyether polyols, polymer polyols obtained by adding or dispersing vinyl to polymers from acrylonitril, styrene or the like, urea-dispersed polyols, and polycarbonate polyols

In addition to those polyol compounds above, it is possible to employ also copolymers thereof, e.g. a block copolymer of polyoxytetramethylene glycol (PTMG) and caprolactone. These copolymers can be prepared, for example, by ring-opening copolymerization of ε-caprolactone to PTMG, or ring-opening copolymerization of tetrahydrofuran, ethylene oxide or propylene oxide to polyester polyol. These polyols may be used singly or in combination of two or more kinds thereof. Two functional glycols are preferably used as prepolymers used in the present invention. As in case of the polyisocyanate compounds described above, it is also preferred that trifunctional or more multifunctional polyol compounds be used in combination in consideration of physical properties of the resultant polyurethane particles.

(3) Hydrophilicity-affording components:

It is preferred in the present invention that the polyurethane prepolymer is allowed to react with compounds having a hydrophilic functional group for avoiding coagulation of the polyurethane prepolymer fine particles extruded through the porous glass material or the resultant polyurethane fine particles hardened therefrom and also for achieving stability of those fine particles.

Examples of such hydrophilic functional group are anion group, cation group and nonion group. These groups may be used singly or in a combination of either cation group/nonion group or anion group/nonion group. Selection of these hydrophilic functional group may be effected, depending upon properties of the hard porous membrane used. For instance, a combination of anion group/nonion group is most preferred in case of the hard porous membrane having the surface coated with polysiloxane bonds. However, it is still possible to manufacture the target monodisperse polyurethane fine particles without using said hydrophilicity-affording component.

Preferable anion groups are carboxy and sulfonic acid groups. The compounds enabling to give such functional group to the polyurethane are those compounds containing, in its molecule, at least one active hydrogen atom and a functional group which can be dissociated into an anion. Specific examples of such compounds are dimethylolpropionic acid, dimethylolbutanoic acid, polycaprolactonediol having carboxyl group, polyester polyol containing sulfonic acid salt, di(β-hydroxyethyl) 5-sulfo-isophthalate and so on. By using any of these compounds as a component of the raw material, an anion group may be incorporated into the polyurethane or prepolymer.

Quaternary ammonium ion group is most preferably referred to as cation group. The compounds enabling to give such functional group to the polyurethane are those compounds containing, in its molecule, at least one active hydrogen atom and a quaternary ammonium group or an amino group which can be changed into a quaternary amino group, but these are allowed to react with NCO group.

Specifically, an alkanolamine such as N-methyldiethanolamine, or N-ethylethanolamine is used as a component of the raw material, allowed to react with NCO group and then with a quaternizing agent such as acids or benzyl chloride. Thus, quaternary ammonium group may be incorporated into the polyurethane or prepolymer.

As a nonion group, a polyoxyalkylene group, preferably polyoxyethylene group is used, and specifically polyoxyalkylene polyol is used as one component of raw materials and allowed to react with NCO group. Thus, a nonion group can be incorporated into the polyurethane or prepolymer.

(4) Chain extender:

Specific examples of chain extenders made of a low molecular compound containing, in its molecule, at least two active hydrogen atoms in the present invention are low molecule glycols such as ethylene glycol, propylene glycol, 1,4-butanediol, and trimethylolpropane, amines such as ethylenediamine, propylenediamine, butylenediamine, hexamethylenediamine, 2,2,4-trimethylhexamethylenediamine, isophorone-diamine, dicyclohexylmethane-4,4'-diamine, bisaminodipropyleneamine, bisaminodiethylamine, and piperazine, alkanolamines such as diethanolamine, and hydrazine or derivatives thereof.

The chain extender is to be reacted with the polyurethane prepolymer extruded in droplets by combining the chain extender with a dispersant at the time of manufacturing the polyurethane particles, or to be used so as to react with a portion of NCO group at the stage of preparing the prepolymer and then allowed to react with NCO group of the prepolymer at the stage of manufacturing the polyurethane particles so as to attain completely the chain extending reaction. As for chain extenders to be used at the time of preparing the prepolymer, it is preferable to use such compounds containing hydroxy group or aromatic amine compounds, which have a reaction rate close to that of polyols. On the other hand, as chain extender to be combined with dispersants and to be reacted at the time of preparing fine particles, it is preferable to use aliphatic amine compounds, hydrazine or the like, which have a faster reaction rate than water so as to achieve effectively the chain extending reaction. This has a further advantage of restricting foaming due to the generation of carbon dioxide gas resulting from the reaction of water with the isocyanate group.

(5) Organic solvent

As organic solvents used for adding to the polyurethane prepolymer in the present invention, any organic solvent may be used as long as it is capable of dissolving the polyurethane prepolymer. However, hydrophobic organic solvents are preferred for manufacturing stably monodisperse polyurethane particles having high uniformity. Followings are some specific examples of such hydrophobic organic solvents.

Aromatic hydrocarbon type organic solvent: toluene, benzene, xylene.

Aliphatic hydrocarbon type organic solvent: pentane, hexane, heptane, octane, decane, tetradecane, hexadecane.

Alicyclic hydrocarbon type organic solvent: tetralin, decalin, cyclohexane cylcohexane substituted derivatives.

Halogenated hydrocarbon type organic solvent: methylene chloride, chloroform, carbon tetrachloride, trichloroethane, tetrachloroethane, monochlorobenzene, dichlorobenzene.

Ester type organic solvent: ethyl acetate, butyl acetate, isoamyl acetate, butyl butyrate.

Ketones type organic solvent: methyl isobutyl ketone, diisobutyl ketone, cyclohexanone.

Ether type organic solvents: diisopropyl ether, diethyl ether, anisole.

Others: ethylcellusolve acetate, butyl cellosolve acetate.

The above-cited organic solvents may be used singly or in combination of two or more kinds, depending upon the necessity.

In addition to said hydrophobic organic solvents, hydrophilic solvents may be also used for improving the solubility of the polyurethane prepolymer. Examples of the hydrophilic organic solvent are ketone type solvents such as acetone, and methyl ethyl ketone, amide type solvents such as dimethylformamide, and dimethylacetamide, ether type solvents such as dioxane, tetrahydrofuran, and diethylene glycol dimethyl ether, ester type solvents such as ε-caprolactone, cellosolve type solvents such as diethylene glycol monomethyl acetate N-methylpyrrolidone, and dimethylsulfoxide.

The organic solvents used in manufacturing the polyurethane particles are removed or recovered, depending upon the necessity. Methods of removing organic solvents from the methods generally used by those skilled in the art may be used. For instance, heating, evaporation, and exposure to air current and the like methods may be cited and used singly or in combination.

(6) Other additives:

In manufacturing the monodisperse polyurethane particles according to the present invention, any other additives may be used for the purpose of stabilizing the formation of fine particles. Surfactants, protective colloids and so on may be cited specifically as such additives.

Those well-known surfactants such as anionic, cationic, nonionic surfactants and so on may be used as surfactants, and nonionic and anionic surfactants are preferred in particular in view of dispersion stability and the like.

Furthermore, hydrophilic polymer materials are available as said protective colloids. Some specific examples of such materials are anionic protective colloids such as carboxymethyl cellulose (CMC), and sodium polyacrylate and nonionic protective colloids such as methyl cellulose, hydroxyethyl cellulose, polyvinylpyrrolidone, water-insoluble polyurethane (e.g. Collacral PU-85, BASF AG, etc.) polyvinyl alcohol, and polyacrylamide.

In addition to said additives providing an effect of stabilizing the particle formation, it is also preferred that a pigment or dyestuff for coloring the particles be added as well to color the monodisperse polyurethane fine particles obtained. These pigments or dyestuffs may be suitable added either at the time of preparing the polyurethane prepolymer or after the synthesis prior to emulsification of the same.

Moreover, it is also possible to use additional additives for improving the durability and/or weatherability of the polyurethane. Any of those well-known to one skilled in the art of polyurethane, such as antioxidants, anti-yellowing agents, ultraviolet stabilizers and so on may be used.

The methods of manufacturing monodisperse polyurethane particles according to the invention consist mainly of preparing the polyurethane prepolymer and extruding the resultant polyurethane prepolymer through hard porous membrane into a dispersant in the form of droplets.

The polyurethane prepolymer can be prepared according to conventional methods well known in the technical field of polyurethane. Dilution of the polyurethane prepolymer with an organic solvent is effected at the stages of mixing the raw materials, at the time of reaction or after the reaction. In the synthesis of the polyurethane prepolymer, the ratio between active hydrogen atom (H*) and isocyanate group should range preferably between 1.2 and 2.5 approximately in terms of equivalent ratio of NCO/H*. If the ratio is below 1.2, the viscosity of the polyurethane prepolymer will be too high, thus requiring a great amount of the organic solvent. Conversely, if the ratio exceeds 2.5, this will result in a large amount of inact polyisocyanate compound. Hence, neither of these is desirable.

Next, an example of preparation with hard glass material as hard porous membrane in the step of particle formation will be described. As methods of extruding the polyurethane prepolymer or its solution through porous glass material into the dispersant in the form of droplets, it is possible to cite a method of using a liquid-sending pump, a method of pressurization with dry air or nitrogen gas and the like. The liquid-sending pressure should be determined, depending upon such factors as viscosity of the polyurethane prepolymer or the like. In this respect, however, it may be said that the pressure of about 0.1 - 5 kfg/cm$^2$ will be sufficient and also that a still lower pressure will be available in case the pore diameter of hard porous membrane is relatively large. Therefore, the method does not require such high pressure as applied, for instance, when a micro fluidizer is used.

As the porous glass material, those having a pore diameter of 0.1 - 20 μm with a very uniform distribution of pore diameter which can be said to be "monodisperse", are commercially available and can be used in this invention. More specifically, as such hard porous membrane, MPG pipe (Kiyomoto Steel Manufacturing Co., Ltd.) made of glass may be used.

Such hard porous membranes described above allow modification and/or adjustment of the surface properties by various chemical modifications. The type of chemical modification can be selected, depending, upon the materials and/or properties of the target monodisperse polyurethane particles.

Partide diameter of monodisperse polyurethane particles should be determined, depending upon such factors as pore diameter of hard porous membranes, extent of hydrophilicity, balance between viscosity of the polyurethane prepolymer and hydrophilicity of hard porous membrane, extruding pressure and so on. Through appropriate selection and determination of these factors and conditions, the particle diameter may be readily adjusted as desired.

It is preferable that dispersants be moved at a predetermined flow rate and may be circulated or rotated so as to come repeatedly into contact with the porous glass material. Through such repeated contacts, content of polyurethane particles contained in the dispersant, namely concentration of solid component may be increasad advantageously.

Hardening process of the polyurethane prepolymer extruded in the form of droplets into a dispersant, preferably water containing a chain extender, will take place progressively through its reaction with the water molecule, if the chain extender is unavailable. If an aliphatic diamine or the like is contained as a chain extender in water, the hardening proccess will take place simultaneously through the reaction with the chain extender, at a time with extrusion of the prepolymer in the form of droplets. In this respect, it is also preferable for performing the complete reaction that the dispersion be stirred under heating.

**Examples**

Embodiments of the present invention will be shown below in detail.

Example 1

A solution of polyurethane prepolymer was prepared by mixing 40 g of polyurethane prepolymer. WP-303K (Daiichi Kogyo Seiyaku Co., Ltd.) (a tri-functional TDI/PPG (2,4-toluene diisocyanate/ polypropylene glycol) prepolymer with a molecular weight of 19,000, and having 2.8% reactive NCO groups) and 6 g of hexadecane.

A dispersant was prepared by dissolving, in 1500 g of distilled water, 5 g of polyvinylpyrrolidone: K-15 (international Specialty Chemicals Co., Ltd.), 0.5 g of sodium lauryl sulfate as a surfactant, and 5 g of piperazine hexahydrate as a chain extender.

The above-mentioned solution of polyurethane prepolymer was then emulsified in said dispersant under 0.4 kgf/cm$^2$ by using a membrane-emulsifier equipped with a porous glass tube having a pore diameter of 1.4 μm. The resultant emulsion was stirred at 50°C for 3 hours for completing the hardening reaction.

After completing the hardening reaction, removal of the organic solvents and water from the emulsion gave polyurethane particles. Then, determinations of the particle diameter and distribution thereof were made on the monodisperse polyurethane particles. Thus, number average of particle diameter was found 8 μm, and its variation coefficient was 10%.

Example 2

Target monodisperse polyurethane particles were prepared in the same manner as in Example 1 above, except for changes specified below. Thus, a solution of polyurethane prepolymer was prepared by mixing 12 g of the polyurethane prepolymer: WP-303K (Daiichi Kogyo Seiyakui Co., Ltd.), 50 g of xylene and 10 g of hexadecane. Furthermore, 1.5 g of piperazine hexahydrate was used as a chain extender. Emulsification was effected by setting pressure to the membrane-emulsifier at 0.3 kgf/cm$^2$. Then, determinations of the particle diameter and its distribution were made on the resultant polyurethane particles. Thus, it was found that a number-average particle diameter of monodisperse particle was 6.9 μm and a variation coefficient of particle-diameter was 9.4%.

Example 3

Target monodisperse polyurethane particles were prepared in the same manner as in Example 1 above, except for changes specified below. Thus, a solution of polyurethane prepolymer was prepared by mixing 40 g of the polyurethane prepolymer: WP-303K (Dai-ichi Kogyo Seiyaku Co., Ltd.), 54 g of xylene and 40 g of hexadecane. Furthermore, as a component for the dispersant, 5 g of K-30 (International Specialty Chemicals Co., Ltd.) was used instead of polyvinylpyrrolidone: K-15. Emulsification was made by setting pressure to the membrane-emulsifier at 0.37 kgf/cm$^2$. Then, determinations of the particle diameter and its distribution was effected on the resultant polyurethane particles. Thus, it was found that the particles were monodisperse particles having a number-average particle diameter of 30.5 μm and its variation coefficient of 9.8%.

Control Example 1

Target monodisperse polyurethane particles were prepared in the same manner as in Example 1 above, except for some changes specified below. In this case, instead of the membrane-emulsifier, Homomixer (Tokushu Kikai Inc.) was used as a disperser. With this machine, a solution of polyurethane prepolymer was charged therein and stirred for 3 minutes, while stirring the dispersant at 8,000 - 8,500 rpm to give an emulsion. Then, determinations of the particle diameter and its distribution were effected on the resultant polyurethane particles. Thus, it was found that the particles were polydisperse particles having a number-average particle diameter of 28.3 μm and a poor uniformity shown by its variation coefficient of 43.6%.

Control Example 2

Polyurethane particles were prepared by using the same method as used in Control Example 1 above and other prescriptions which were same as in Example 2. Through determinations, it was found that these particles were the polydisperse particles having a number-average particle diameter of 17.9 μm and a poor uniformity shown by its variation coefficient of 34.2%.

Control Example 3

Polyurethane particles were obtained by using the same method as in Control Example 1 above and other prescriptions which were same as in Example 2, except that stirring was effected for one minute while stirring the dispersant at 7,000 - 7,500 rpm and with the other conditions for prescription being same as in Example 3. Through determinations, it was found that there particles were polydisperse particles having a number-average particle diameter of 40.5 μm and its variation coefficient of 46.2%.

**Claims**

1. A method of manufacturing monodisperse polyurethane particles having diameters of from 0.1 to 100 micrometers, comprising the steps of:

contacting a polyurethane prepolymer liquid with a dispersant via a hard porous membrane having a uniform porous diameter,
extruding said polyurethane prepolymer liquid through said hard porous membrane into said dispersant in the form of droplets; and
having said polyurethane prepolymer droplets hardened into spherical particles,

wherein said dispersant comprises water and a water-soluble chain extender.

2. The method according to Claim 1, wherein said hard porous membrane is made of porous glass material.

3. The method according to Claim 2, wherein said porous glass material is one obtained by hydrophilic modification.

4. The method according to Claim 1, wherein said polyurethane prepolymer liquid is a solution in a hydrophobic organic solvent.

5. Monodisperse polyurethane particles having diameters of from 0.1 to 100 micrometers and a variation coefficient of particle diameter ranging below 10%, said particle being manufactured by the method comprising the steps of
contacting a polyurethane prepolymer liquid with a dispersant via a hard porous membrane having a uniform porous diameter,
extruding said polyurethane prepolymer liquid through said hard porous membrane into said dispersant in the form of droplets; and
having said polyurethane prepolymer droplets hardened into spherical particles, wherein said dispersant comprises water and a water-soluble chain extender.

6. The monodisperse polyurethane particles according to Claim 5, wherein said particles contain a coloring agent.

**Patentansprüche**

1. Verfahren zur Herstellung von monodispersen Polyurethan-Partikeln, die Durchmesser von 0,1 bis 100 µm haben, umfassend die Stufen:

- Inkontaktbringen einer Polyurethanprepolymer-Flüssigkeit durch eine harte poröse Membran, die einen einheitlichen Porendurchmesser hat, mit einem Dispergiermittel,

- Extrudieren der Polyurethanprepolymer-Flüssigkeit durch die harte poröse Membran in das Dispergiermittel unter Bildung von Tröpfchen und

- Härten der Polyurethanprepolymer-Tröpfchen zu sphärischen Partikeln, wobei das Dispergiermittel Wasser und einen wasserlöslichen Kettenextender umfaßt.

2. Verfahren nach Anspruch 1, wobei die harte poröse Membran aus porösem Glasmaterial hergestellt ist.

3. Verfahren nach Anspruch 2, wobei das poröse Glasmaterial ein Material ist, das durch hydrophile Modifikation erhalten wird.

4. Verfahren nach Anspruch 1, wobei die Polyurethanprepolymer-Flüssigkeit eine Lösung in einem hydrophoben organischen Lösungsmittel ist.

5. Monodisperse Polyurethan-Partikel mit Durchmessern von 1 bis 100 µm und einem Variationskoeffizienten des Partikeldurchmessers im Bereich unter 10 %, wobei das Partikel durch das Verfahren hergestellt wird, das die folgenden Stufen umfaßt:

- Inkontaktbringen einer PolyurethanprepolymerFlüssigkeit durch eine harte poröse Membran, die einen einheitlichen Porendurchmesser hat, mit einem Dispergiermittel,

- Extrudieren der Polyurethanprepolymer-Flüssigkeit durch die harte porös Membran in das Dispergiermittel unter Bildung von Tröpfchen und

- Härten der Polyurethanprepolymer-Tröpfchen zu sphärischen Partikeln, wobei das Dispergiermittel Wasser und einen wasserlöslichen Kettenextender umfaßt.

6. Monodisperse Polyurethan-Partikel nach Anspruch 5, wobei die Partikel ein Färbemittel enthalten.

**Revendications**

1. Procédé pour la production de particules de polyuréthanne monodispersées ayant des diamètres de 0,1 à 100 µm, comprenant les étapes consistant :

à mettre en contact un prépolymère de polyuréthanne liquide avec un dispersant par l'intermédiaire d'une membrane poreuse dure ayant un diamètre de pores uniforme,
à extruder ledit prépolymère de polyuréthanne liquide à travers ladite membrane poreuse dure dans ledit dispersant sous forme de gouttelettes ; et

à laisser durcir lesdites gouttelettes de prépolymère de polyuréthanne sous forme de particules sphériques, dans lequel ledit dispersant comprend de l'eau et un agent hydrosoluble d'allongement de chaîne.

2.  Procédé suivant la revendication 1, dans lequel ladite membrane poreuse dure est constituée d'un verre poreux.

3.  Procédé suivant la revendication 2, dans lequel ledit verre poreux est un verre poreux obtenu par une modification hydrophile.

4.  Procédé suivant la revendication 1, dans lequel ledit prépolymère de polyuréthanne liquide est une solution dans un solvant organique hydrophobe.

5.  Particules de polyuréthanne monodispersées ayant des diamètres de 0,1 à 100 μm et un coefficient de variation du diamètre de particules dans l'intervalle de moins de 10 %, une telle particule étant produite par le procédé comprenant les étapes consistant

    à mettre en contact un prépolymère de polyuréthanne liquide avec un dispersant par l'intermédiaire d'une membrane poreuse dure ayant un diamètre de pores uniforme ;

    à extruder ledit prépolymère de polyuréthanne liquide à travers ladite membrane poreuse dure dans ledit dispersant, sous forme de gouttelettes ; et

    à laisser lesdites gouttelettes de prépolymère de polyuréthanne durcir sous forme de particules sphériques, ledit dispersant comprenant l'eau et un agent hydrosoluble d'allongement de chaîne.

6.  Particules de polyuréthanne monodispersées suivant la revendication 5, qui contiennent un agent colorant.